Europäisches Patentamt

European Patent Office

Office européen des brevets

(11) Publication number: **0 210 447**
**A1**

(12) # EUROPEAN PATENT APPLICATION

(21) Application number: **86108873.0**

(22) Date of filing: **30.06.86**

(51) Int. Cl.⁴: **A 01 N 63/00**

(30) Priority: **01.07.85 NL 8501892**

(43) Date of publication of application:
**04.02.87 Bulletin 87/6**

(84) Designated Contracting States:
**AT CH DE FR IT LI NL**

(71) Applicant: **Koppert, Petrus Cornelis**
**Veilingweg 64**
**NL-2651 BE Berkel en Rodenrijs(NL)**

(71) Applicant: **Koppert, Paulus Adrianus**
**Veilingweg 64**
**NL-2651 BE Berkel en Rodenrijs(NL)**

(71) Applicant: **Oosthoek, Hendrik Peter Paul**
**Verveenstraat 14**
**NL-2651 EX Berkel en Rodenrijs(NL)**

(72) Inventor: **Koppert, Petrus Cornelis**
**Veilingweg 64**
**NL-2651 BE Berkel en Rodenrijs(NL)**

(72) Inventor: **Koppert, Paulus Adrianus**
**Veilingweg 64**
**NL-2651 BE Berkel en Rodenrijs(NL)**

(72) Inventor: **Oosthoek, Hendrik Peter Paul**
**Verveenstraat 14**
**NL-2651 EX Berkel en Rodenrijs(NL)**

(74) Representative: **Bruin, Cornelis Willem et al,**
**Octroolbureau Arnold & Siedsma Isartorplatz 5**
**D-8000 München 2(DE)**

(54) Agent for controlling harmful insects in agricultural and market garden crops.

(57) Living, partly grown parasitic wasps intended for the biological control of insects are filled into gelatin capsules for better dissemination and dosage.

Preferably, the parasitic wasps are of two to three different stages of development per capsule. The capsules have at least one perforation to promote hatching of the parasitic wasps and are preferably made delayed soluble in water.

EP 0 210 447 A1

0210447

Agent for controlling harmful insects in agricultural and market garden crops.

---

The invention relates to an agent for biologically controlling harmful insects in agricultural and market garden crops, as well as methods for making and applying such an agent.

It is known that harmful insects in agricultural and market garden crops can be controlled biologically by making use of predatory insects, namely parasitic wasps. In the proximity of the threatened crops are placed specimens of the parasitic wasp which are not yet fully grown but which have already reached a stage such that a short time later they will produce adult parasitic wasps. The adult parasitic wasps hatch out, move to the plants of the crop and there seek out their prey in the form of the harmful insects. They feed on a part of these insects and use another part to lay their eggs in or near so that they multiply at the expense of the harmful insects. In this way damage to the crops by the harmful insects is halted or restricted to a minimum after a short time. The parasitic wasps are not harmful to the crops and do not cause nuisance to human beings, in view of the fact that after completing their task they die out naturally.

A known example of such a method is the use of parasitic wasps of the genus Trichogramma to control harmful insects in corn, cotton, pepper and tomato plants. Much damage is caused to corn in fields by for example the

- 1 -

corn borer (Ostrinia nubilalis), a butterfly which lays its eggs on the underside of the leaves. The caterpillars emerging from these eggs move to the top of the plants, penetrate into the stalk and burrow downwards through the stalks. In consequence the plants become seriously damaged and produce a bad crop yield. If however Trichogramma pupae are introduced in the proximity of the corn plants and adult Trichogrammas are allowed to hatch out from them, these adult Trichogrammas will feed on part of the eggs of the corn borer and make use of another part of the eggs to parasitize them, so that they multiply at the expense of the corn borer and the feared caterpillars cannot develop or can only do so in small numbers. The same applies in the use of Trichogrammas against harmful insects in cotton fields, pepper and tomato plants, and against harmful insects in orchards, vineyards and brassicaceous plants.

There are moreover many other parasitic wasps which can be brought into action against harmful insects, such as Encarsia formosa against Trialeurodes vaporariorum in tomato plants among others, Aphidius matricariae against Myzus persicae and Nasonia vitripennis against Musca domestica.

In the use of the parasitic wasps, partly grown specimens (that is, parasitized host eggs, larvae, pupae, nymphs or imagos) have to be brought into the proximity of the threatened crops. They are usually spread as uniformly as possible over the crops to enable effective controlling of harmful insects. Various methods are known for dissemination. For example, partly grown Trichogrammas in the form of parasitized host eggs can be spread manually or with a suitable device over a cornfield, while it is also possible to attach the eggs to a special carrier (card or plate) of cardboard or plastic and to then hang this carrier on the leaves of the plant. In the case of parasitic wasps which must be spread over glasshouse tomato plants, the partly grown parasitic wasps, adhered to a plant leaf or to a carrier of cardboard, can be attached to the plants, or otherwise a spreadable mixture of partly grown parasitic wasps and sawdust or bran can be scattered over the ground and the plants. All these methods have certain disadvantages, however.

Scattering of partly grown parasitic wasps (without admixture) over a crop has the drawback that a correct dosage is difficult because of the small dimensions of the parasitic wasps. This drawback can be obviated by admixture of a filler or by attachment to a carrier, but this does not solve another problem, namely that the parasitic wasps can easily be eaten by ants and slugs. Spreading parasitic wasps with or without admixture over a crop in the field furthermore has the drawback that many parasitic wasps are lost as a result of climatological conditions (rain-showers).

The invention aims to obviate the drawbacks mentioned and to make the partly grown parasitic wasps available to the threatened plants in a manner such that their chance of survival is greater and that a correct dosage still remains possible.

The invention provides in the first place an agent for controlling harmful insects in agricultural and market garden crops, which agent consists of gelatin capsules having at least one perforation and being filled with living, not yet fully grown parasitic wasps. The invention additionally provides methods for making the said agent and applying it.

The gelatin capsules with content can be spread and therefore allow easy dissemination over a crop, whereby a correct dosage is possible. They will not be eaten by ants,

- 3 -

slugs and the like, so that the parasitic wasps in the capsules are protected against their enemies. Furthermore the capsules will, because of their shape and small specific weight, remain floating on water, whereby the chance of the parasitic wasps drowning is small. When the adult parasitic wasps emerge they can leave the capsules easily by way of the perforations and then move onto the plants of the crop, enabling effective controlling of harmful insects in the crop.

The capsules can in principle take any desired form, such as an egg shape, ball shape or cylinder shape, but are preferably elongated cylindrical with rounded ends. The volume of each capsule can vary widely, for example from 0.5 -25 ml. For the purpose of filling there can be a closable filling aperture or the capsule can consist of two joinable parts. Capsules have proved very satisfactory made up of two parts telescopically slidable into each other, which do not need to be adhered to each other because of their close fitting.

Each capsule has at least one perforation to ensure that after hatching the adult parasitic wasps can escape from the capsule. These perforations can be arranged at any suitable place on the capsule, although in the case of a cylindrical capsule they will preferably be arranged at the cylinder ends, so that there is little risk of the perforations being closed off or blocked by chance circumstances. In most cases two perforations per capsule are sufficient.

According to the invention the capsules mainly consist of gelatin (or a similar material), because this material is biologically compatible and degradable, has a low cost price and can be easily made in the required form. It is moreover not easily eaten by ants, slugs and the like. Conventional additives such as glycerol may be present in addition to the gelatin.

The gelatin of the capsules is more or less translucent, which has a favourable influence on the hatching percentage of the parasitic wasps. It can nevertheless be useful to reduce penetration by radiation by including a white colorant or pigment in the mass of the gelatin.

Too strong a heating of the content of the capsules by incoming sunlight can in this way be counteracted.

The gelatin of the capsules is further swellable and soluble in water, which means that disposing of the capsules after use is simple. Namely, the capsules will sooner or later end up on the ground and disintegrate there in rain or ground water so that they leave no traces. The dissolved gelatin cannot harm the environment. Nevertheless, and in accordance with the invention, it is advantageous to decrease or delay the swellability and solubility of the gelatin somewhat in order to prevent an immediate disintegration of the capsules in rain water after dissemination.

A decreased or delayed swellability and solubility of the gelatin may be obtained in several different ways. Thus it is possible to apply to the interior and exterior sides of the capsules a water repellant layer, comprising e.g. a nitro-cellulose lacquer, a PVC adhesive or a polyurethane lacquer. The application may be effected in any way, e.g. by brushing, dipping, impregnating or optionally treating in a fluid bed system. Further, it is possible to incorporate the water repellant ingredients in the gelatin mass already during the production of the capsules.

According to the invention the gelatin capsules are filled with living, partly grown parasitic wasps. These partly developed parasitic wasps do not yet have any form of their own, but display the form and dimensions of a host insect in which they develop. The partly grown parasitic wasps therefore consist generally of eggs, larvae, pupae, nymphs or imagos of host insects that are parasitized by parasitic wasps. An appropriate example is formed by eggs of the grain moth (Sitotroga cerealella) or the meal moth (Ephestia Kuhniella), which are parasitized by Trichogrammas and can as a result be regarded as Trichogramma eggs. The Trichogramma eggs can also consist of parasitized eggs of other harmful insects such as Ostrinia nubilalis, Spodoptera littoralis, Mamestra brassicae or insects of the genus Heliothis.

The usually little mobile, partly grown parasitic wasps do not display any tendency to leave the capsules and will therefore form a stable content. Only when the adult parasitic wasps have hatched out will they begin to move and leave the capsules by way of the perforations. The number of parasitic wasps per capsule can be varied depending on the purpose of use. By way of example, around 1000 partly grown parasitic wasps can be present in each capsule. The development stage of the parasitic wasps will be such that the adult specimens hatch out within a shorter or longer period; although this stage of development can be the same for all parasitic wasps in one capsule, parasitic wasps in two to three different stages of development are considered preferable, in order to increase effectiveness.

It can sometimes be useful to include some food for the parasitic wasps in the capsules. This food consists preferably of per se known vegetable foodstuffs such as honey or a sugar yeast mixture. The main purpose of this food addition is to offer the parasitic wasps the possibility of food intake immediately after hatching out.

It can further be sometimes required to accommodate weighting material in the capsules in addition to the parasitic wasps. Such weighting material can serve in the first place to facilitate the dissemination of the capsules and further to prevent or lessen the danger of blowing away by the wind.

The invention also provides a method for making the insecticide referred to, which is characterized in that gelatin capsules provided with at least one perforation are filled with living, partly grown parasitic wasps. It is of course necessary to first breed the parasitic wasps for this purpose.

The breeding of the partly grown parasitic wasps can take place in any suitable manner, whereby easily bred prey insects (for example meal moths in the case of Trichogrammas) serve as hosts for the parasitic wasps. In favourable temperature, humidity and feed conditions a regular development will take place, subsequent to which the partly grown parasitic wasps in the form of parasitized host eggs, larvae, pupae, nymphs or imagos, can be periodically harvested.

When a sufficient quantity of parasitic wasps (preferably in varying stages of development) has been collected, gelatin capsules are filled with them. The capsules are thereby already provided beforehand with one or more perforations and are also preferably made less penetrable by radiation and delayed soluble in water. The number of parasitic wasps to be put in can be regulated simply by filling the capsules to a pre-determined height or otherwise introducing an exact volume of parasitic wasps into the capsules. In addition to these parasitic wasps some feed and/or weighting material can be put in if required.

After filling the capsules are closed, placed in packaging and then sent to the place of use. During transport it can be of use to maintain the temperature below the outside temperature in order to brake the development of the parasitic wasps. It has thus been found that with Trichogramma eggs a temperature of 12 degrees C is favourable during transport. For this purpose a special cold accumulator can be applied in the packaging.

As a result of special conditioning methods, the hatching time of the adult parasitic wasps can if required be influenced prior to transport. Such conditioning methods are in themselves known.

At the place of use (for example a cornfield) the packing is opened and the capsules are disseminated over or in the threatened crop. Dissemination can take place by manual spreading or with a spreading device and if desirable from an aircraft or helicopter. The capsules fall on the leaves and between the plants, where they remain lying. Under the influence of the prevailing temperature and the quantity of light an accelerated further development of the living material in the capsules then takes place, whereby after a certain time virtually all the parasitic wasps are adult and hatch out. The adult parasitic wasps leave the capsules by way of the perforations and fly over to the leaves of the crop where they go and seek out quarry in the form of harmful insects. As soon as the parasitic wasps have found their prey (in the case of Trichogrammas for example a quantity of eggs of the corn borer or another insect) they feed on a part of them and lay their eggs in the remaining part. From the eggs parasitized in this way come not caterpillars but a new generation of adult parasitic wasps, which can continue controlling their prey. As a result, damage to the crop by harmful insects will cease or be reduced to a minimum after a short time. After completing their task the parasitic wasps die out naturally. The left over capsules fall sooner or later to the ground, dissolve in water after a time or are ploughed under, so that they leave no trace and no damage to the environment results.

In this way effective control of harmful insects in agricultural and market garden crops is therefore made possible.

## CLAIMS

1. Agent for biologically controlling harmful insects in agricultural and market garden crops, consisting of gelatin capsules having at least one perforation, said capsules being filled with living, not yet fully grown parasitic wasps.

2. Agent as claimed in claim 1, characterized in that the capsules are elongate cylindrical in form with rounded ends.

3. Agent as claimed in claim 1 or 2, characterized in that perforations are arranged at both ends of the capsules.

4. Agent as claimed in claims 1-3, characterized in that each capsule consists of two parts which can slide telescopically into each other.

5. Agent as claimed in claims 1-4, characterized in that the penetrability of the capsules by sunlight is reduced by the application of a white colorant or pigment.

6. Agent as claimed in claims 1-5, characterized in that each capsule is made delayed swellable and soluble in water.

7. Agent as claimed in claims 1-6, characterized in that per capsule the partly grown parasitic wasps have two to three differing stages of development.

8. Agent as claimed in claims 1-7, characterized in that feed is present in the capsules in addition to the parasitic wasps.

9. Agent as claimed in claims 1-8, characterized in that a weighting material is present in the capsules in addition to the parasitic wasps.

10. Agent as claimed in claims 1-9, characterized in that the partly grown parasitic wasps consist of eggs, larvae, pupae, nymphs or imagos of host insects which are parasitized by parasitic wasps, particularly Trichogrammas.

11. Method for manufacturing an insecticide as claimed in claims 1-10, characterized in that gelatin capsules provided with at least one perforation are filled with living, partly grown parasitic wasps.

12. Method as claimed in claim 11, characterized in that the not yet fully grown parasitic wasps have two to three differing stages of development.

13. Method as claimed in claim 11, characterized in that in addition to parasitic wasps feed is put into the capsules.

14. Method as claimed in claims 11-13, characterized in that in addition to the predatory insects a weighting material is placed in the capsules.

15. Method as claimed in claims 11-14, characterized in that the capsules are stored at a temperature below the outside temperature.

16. Method for biologically controlling harmful insects in agricultural and market garden crops, characterized in that the agent as claimed in claims 1-10 or the product of the method as claimed in claims 11-15 are disseminated over a crop threatened by harmful insects.

## EUROPEAN SEARCH REPORT

Application number

EP 86 10 8873

### DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | REVIEW OF APPLIED ENTOMOLOGY, Series A, vol. 69, abstract no. 2158, CAB no. 81751799, Commonwealth Agricultural Bureaux, London, GB; M.G. LEIBENZON et al.: "Mechanised release of trichogramma", & ZASHCHITA RASTENII, no. 5, 1980, pages 35,36 * Abstract * | 1-16 | A 01 N 63/00 |
| A | FR-A-2 456 478 (P.C. KOPPERT et al.) | 1-16 | |
| A | GB-A-2 000 007 (P.A. KOPPERT) | 1-16 | |
| A | FR-A-2 460 625 (INSTITUT NATIONAL DE LA RECHERCHE AGRONOMIQUE) | 1-16 | **TECHNICAL FIELDS SEARCHED (Int. Cl. 4)** |
| | | | A 01 N |

The present search report has been drawn up for all claims

| Place of search | Date of completion of the search | Examiner |
|---|---|---|
| THE HAGUE | 10-11-1986 | DECORTE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82